# EUROPEAN PATENT SPECIFICATION

(11) **EP 2 061 856 B1**
(45) Date of publication and mention of the grant of the patent: **05.01.2011**
(21) Application number: 07820106.8
(22) Date of filing: 11.09.2007
(51) Int. Cl.: C09K 8/22, C09K 8/52

(54) **SWELLING INHIBITORS FOR CLAYS AND SHALES**
SCHWELLHEMMER FÜR TON UND SCHIEFERTON
INHIBITEURS DE GONFLEMENT POUR ARGILES ET SCHISTES

(30) Priority: 14.09.2006 IT VA20060059
(43) Date of publication of application: 27.05.2009
(73) Proprietor: Lamberti Spa, 21041 Albizzate (VA) (IT)
(72) Inventor: FEDERICI, Franco, 21052 Busto Arsizio (VA) (IT); MERLI, Luigi, 21047 Saronno (VA) (IT); VIGANO', Laura, 20015 Parabiago (MI) (IT); BOTTARELLO, Lorena, 21048 Solbiate Arno (VA) (IT); BOSSI, Thierry, 21030 Orino (VA) (IT); LI BASSI, Giuseppe, 21026 Gavirate (VA) (IT)
(86) International application number: PCT/EP2007/059495
(87) International publication number: WO 2008/031806

(56) References cited:
- WO-A-02/20691
- WO-A-2006/013596
- JP-A- 2 269 197
- US-A- 4 605 068

## Description

### Technical Field

The present invention concerns hydration inhibitors for clays and shales, i.e. chemicals that inhibit the swelling of clays and shales which come into contact with the water base fluids used in the oil industry during drilling and construction of oil and gas wells.

The clays and shales swelling inhibitors of the present invention are condensation products of dicarboxylic acids, having from 4 to 10 carbon atoms with alkanolamines, diamines or polyalkyleneamines.

During the rotary drilling of wells, a drilling fluid is circulated through the well, from the underground to the surface, to suspend the drill cuttings originating from the drilling process and to transport the cutting to the surface.

At the same time the drilling fluid cools and cleans the drill bit, reduces the fiction between the drill pipe and the borehole walls and stabilizes the sections of the well that are not reinforced.

Normally the drilling fluids form a filter cake of low permeability which prevents leaking into the surrounding geological formations and avoids excessive losses of the liquid phase of the drilling fluid itself.

Drilling fluids can be classified according to the nature of their continuous liquid phase. There are oil base drilling fluids, in which the solids are suspended in a continuos oleaginous phase and optionally Water or a brine phase is emulsified into the oleaginous phase.

Alternatively, water base drilling fluids contain solids suspended in water or brine or solutions of silicates.

Various chemicals can be added to water base drilling fluids, deliberately or not:
A) organic colloids or clays, used to impart viscosity and fluid loss reduction;
B) insoluble inorganic minerals to increase the fluid density;
C) solids that originate from the drilling process.

The solids, which disperse into the fluid, include cuttings from the drilling operation and from the surrounding unstable geological formations.

When the formation yields solids, which are swellable clayey materials, they can compromise drilling time and increase costs.

There are different kinds of clays and shales that swell and they all can cause a number of problems.

The swelling increases the friction between the drill pipe and the borehole walls, causes drilling fluids losses and sticking between the drill pipe and the borehole walls.

For this reason the development of swelling inhibitors for clays and shales is important for the oil and gas industry.

The present invention works in this direction to solve these problems.

### Background Art

Many clays and shales inhibitors are known in the art, among which inorganic salts such as potassium chloride, which inhibits the swelling of clays and shales, are well known to those skilled in the art.

Many patents have been filed, which describe techniques or products that can be used to inhibit the swelling of clays and shales. Without having the ambition to exhaustively summarize the available patent literature and only by way of example, we cite the following swelling inhibiting compositions:
a) inorganic phosphates, described in US 4,605,068 (Young et al.);
b) polyalkoxy diamines and their salts, in US 6,484,821, US 6,609,578, US 6,247,543 and US 20030106718, all by Patel et al.;
c) choline derivatives, as in US 5,908,814 (Patel et al.);
d) oligomethylene diamines and their salts, in US 5,771,971 (Horton et al.), and US 20020155956 (Chamberlain et al.);
e) the addition product of carboxymethyl cellulose and an organic amine, in WO 2006/013595 (Li Bassi et al.)
f) 1,2-cyclohexanediamine and/or their salts, in WO 2006/013597 (Merli et al.);
g) salts of phosphoric acid esters of oxyalkylated polyols, in WO 2006/013596 (McGregor et al.);
h) the combination of a partially hydrolized acrylic copolymer, potassium chloride and polyanionic cellulose, in US 4,664,818 (Halliday William S. et al.);
i) quaternary ammonium compounds, in US 5,197,544 (Himes Ronald E.);
l) polymers based on dialkyl aminoalkyl methacrylate, in US 7,091,159 (Eoff, Larry S. et al.);
m) aqueous solutions containing a polymer with hydrophilic and hydrophobic groups, in US 5,728,653 (Audibert, Annie et al.);
n) the reaction product of a polyhydroxyalkane and an alkylene oxide, in US 6,544,933 (Reid, Paul Ian et al.).

### Disclosure of Invention

It has now been found that condensation products of dicarboxylic acids with 4 to 10 carbon atoms with alkanolamines, diamines or polyalkyleneamines are excellent clays and shales inhibitors for the oil industry, being capable of effectively inhibiting the swelling of clays and shales in subterranean formations.

These condensation products are amino-esters or amino-amides and can advantageously be prepared as solutions without a purification step.

It is therefore a fundamental object of the present invention a method to inhibit the hydration of clays and shales during driving operations, which includes the use of a water base drilling fluid that contains as clays and shales inhibitor from 0.2 to 5 % by weight of the condensation product of a dicarboxylic acid having 4 to 10 carbon atoms with alkanolamines, diamines or polyalkyleneamines of formula (I) R"'R"N-R'-XH where X is O or NR⁰,

R⁰ is hydrogen or a linear or branched alkyl group having from 1 to 6 carbon atoms, R' is a linear or branched, aliphatic or cicloaliphatic alkylene group having from 2 to 10 carbon atoms, or

R' is R""(NH-R"")ₙ where R"" is ethylene or CH(CH ₃)CH₂, n is a number from 1 to 6 and X is NR⁰;

R" and R"' can be equal or different from one another and are hydrogen or a linear or branched alkyl group having from 1 to 6 carbon atoms, optionally substituted with a hydroxyl group.

It is another object of the present invention to provide a water base drilling fluid which comprises from 0.2 to 5 %, preferably from 2 to 4% by weight, of the condensation product of a dicarboxylic acid having 4 to 10 carbon atoms with alkanolamines, diamines or polyalkyleneamines of formula (1).

It is still another object of the present invention a method to prepare a solution of a clays and shales inhibitor for water base drilling fluids that contains the condensation product of a dicarboxylic acid having 4 to 10 carbon atoms with alkanolamines, diamines or polyalkyleneamines of formula (I).

The condensation products of the present invention can be used in neutral form or as salt with organic or inorganic acids.

In a typical embodiment of the present invention the condensation product has the formula (II), R"'R"N-R'-X-C(=O)-R-C(=O)-X-R'-NR"R"'
where R is an alkylene group, linear or branched, saturated or unsaturated, having from 2 to 8 carbon atoms or a phenylene group, and X, R⁰, R', R" e R"' have the same meaning as in formula (I).

Preferably R is a linear saturated alkylene group.

Amino-esters of formula (II), where X is O, R is a tetramethylene or ethylene group, R' is an ethylene group and R" and R"' can be equal or different and are hydrogen, methyl or hydroxyethyl groups, displayed excellent properties and are therefore preferred in the implementation of the present invention.

Amino-amides of formula (II), where X is NH, R is a tetramethylene or ethylene group, R' is an ethylene group or R""(NH-R"")ₙ where R"" is ethylene or CH(CH₃)CH ₂ and n is a number from 1 to 4 and R" and R"' can be equal or different and are hydrogen, methyl or hydroxyethyl groups, are particularly preferred for use in high temperature environments because they offer, in addition to excellent performance, also a favorable thermal stability.

The clays and shales inhibitors of the present invention can be prepared through condensation by heating the alkanolamine or the diamine or the polyalkyleneamine of formula (I) and adding to it the dicarboxylic acid or the corresponding anhydride, under stirring without any solvent, at a temperature ranging from 100 to 180°C and removing by distillation the water that is formed during the reaction. When the condensation reaction is completed, water and an acid, such as acetic acid or other organic or inorganic acid, can be added to prepare a ready for use aqueous solution of the ester or the amide.

The pH of the solution is normally adjusted to values of about 6-8; the concentration of the amino-ester or the amino-amide in the solution advantageously varies between 30 and 70% by weight.

Alternatively, when the condensation reaction is completed, it is possible to dilute the product with an organic solvent, by way of example with ethylene glycol, propylene glycol or diethylene glycol, adjusting the concentration of the condensation product between 20 and 90% try weight.

The dicarboxylic acids and the anhydrides useful for the preparation of the clays and shales inhibitors of the present invention are commercially available and are, by way of example, succinic acid or succinic anhydride, adipic acid, sebacic acid, fumaric acid, maleic anhydride, phtalic anhydride, isophtalic anhydride or terephtalic anhydride.

Also, various alkanolamines, diamines and polyalkyleneamines of formula (I) are commercially available, and are for example triethanolamine, methylethanolamine, dimethylethanolamine, aminoethylethanolamine, ethylendiamine, isophorondiamine, hexamethylenediamine, diethylenetriamine, triethylenetetramine, tetraethylenepentamine.

To obtain the amino-esters or the amino-amides of formula (II), the molar ration between the dicarboxylic acid and the alkanolamine or the diamine or the polyalkylene amine is about 1:2; higher molar ratios can be used, up to about 1:1, to obtain oligo amino-esters or amino-amides that are also useful to carry out the present invention.

The water base drilling fluid of the invention, in addition to the condensation products between a dicarboxylic acid having from 4 to 10 carbon atoms with alkanolamines, diamines or polyalkyleneamines of formula (I), also comprises the chemicals customarily used and well known to those skilled in the art, such as weighing agents, fluid loss reducers, corrosion inhibitors, defoamers and viscosifiers.

The continuos water phase can be selected among: fresh water, seawater, brines, solutions of soluble organic compounds in water and their mixtures.

Useful weighing agents can be selected among barite, hematite iron oxide, calcium carbonate, magnesium carbonate, organic and inorganic magnesium salts, calcium chloride, calcium bromide, magnesium chloride, magnesium bromide, halides of zinc, and their mixtures.

The following examples illustrate the preparation of water solutions of useful clays and shales inhibitors following the invention; performance tests have been carried out to demonstrate their excellent properties as clays and shales inhibitors.

### EXAMPLE 1

### Preparation of the amino-ester of succinic anhydride with triethanolamine.

In a 1 liter reaction vessel equipped with stirrer, thermometer and distillation head 186.8 g (1.252 moles) of triethanolamine are charged, heat is applied to reach 80°C and 63.2 g (0.626 moles) of succinic anhydride are added; due to the exothermic reaction the temperature reaches 130°C. Vacuum is applied to the reaction vessel to reach a residual pressure of about 20 mm Hg. The water formed in the reaction is distilled off by heating to 160°C in about one hour; after 2.5 hours 11.3 g of water have distilled and the acid number at the thymolphthalein end point is 5 mgKOH/g. The reaction mixture is cooled to 70°C and 75 g of acetic acid and 210 g of water are added.

A solution of clays and shales inhibitor is obtained with a dry content of 49.1% by weight.

### EXAMPLE 2

### Preparation of the amino-ester of adipic acid with triethanolamine.

In a 1 liter reaction vessel equipped with stirrer, thermometer and distillation head 201.4 g (1.35 mules) of triethanolamine are charged, heat is applied to reach 120°C and 98.63 g (0.675 moles) of adipic acid are added. Vacuum is applied to the reaction vessel to reach a residual pressure of about 20 mm Hg. Heating is applied to reach 175°C in about one hour. After 3 hours 23.5 g of water have distilled and the acid number is 5 mgKOH/g. The reaction mixture is cooled to 67°C and 80g of acetic acid and 250g of water are added.

A solution of clays and shales inhibitor is obtained with a dry content of 44.37% by weight.

### EXAMPLE 3

### Preparation of the oligo amino-ester of adipic acid with triethanolamine.

In a 1 liter reaction vessel equipped with stirrer, thermometer and distillation head 181.5 g (1.217 moles) of triethanolamine are charged, heat is applied to reach 120°C and 118.5 g (0.811 moles) of adipic acid are added. Vacuum is applied to the reaction vessel to reach a residual pressure of about 20 mm Hg. Heating is applied to reach 170°C in about one hour. After 3 hours 29 g of water have distilled and the acid number is 5 mgKOH/g. The reaction mixture is cooled to 65°C and 70 g of acetic acid and 250 g of water are added.

A solution of clays and shales inhibitor is obtained with a dry content of 45.97% by weight.

### EXAMPLE 4

### Preparation of the amino-ester of sebacic acid with triethanolamine.

In a 1 liter reaction vessel equipped with stirrer, thermometer and distillation head 178.8 g (1.199 moles) of triethanolamine are charged, heat is applied to reach 100°C and 121.2 g (0.599 moles) of sebacic acid are added. Vacuum is applied to the reaction vessel to reach a residual pressure of about 20 mm Hg. Heating is applied to reach 170°C in about one hour. After 3 hours 21 g of water have distilled and the acid number is 10 mgKOH/g. The reaction mixture is cooled to 54°C and 65 g of acetic acid and 250 g of water are added.

### EXAMPLE 5

### Preparation of the amino-ester of fumaric acid with triethanolamine.

In a 1 liter reaction vessel equipped with stirrer, thermometer and distillation head 208.9 g (1.400 moles) of triethanolamine are charged, heat is applied to reach 60°C and 77.4 g (0.675 moles) of fumaric acid are added. Vacuum is applied to the reaction vessel to reach a residual pressure of about 20 mm Hg. Heating is applied to reach 155°C in about 4.5 hours. At this point 24 g of water have distilled and the acid number is 15 mgKOH/g. The reaction mixture is cooled to 80°C and 90 g of acetic acid and 240 g of water are added.

### EXAMPLE 6

### Preparation of the amino-ester of maleic anhydride with triethanolamine.

In a 1 liter reaction vessel equipped with stirrer, thermometer and distillation head 313.3 g (2.1 moles) of triethanolamine and 98.1 g (1.0 moles) of maleic anhydride are charged. Heat is applied to reach 80°C and this temperature is kept for 0.5 hours. Vacuum is applied to the reaction vessel to reach a residual pressure of about 20 mm Hg. Heating is applied to reach 155°C in 5 hours. At this point 18 g of water have distilled and the acid number is 15 mgKOH/g. The reaction mixture is cooled to 100°C and 110 g of acetic acid and 350 g of water are added.

### EXAMPLE 7

### Preparation of the amino-ester of adipic acid with methyldiethanolamine.

In a 1 liter reaction vessel equipped with stirrer, thermometer and distillation head 238.4 g (2.0 moles) of methyldiethanolamine are charged, heat is applied to reach 100°C and 146.2 g (1.0 moles) of adipic acid are added. Vacuum is applied to the reaction vessel to reach a residual pressure of about 20 mm Hg. Heating is applied to reach 160°C in 5 hours. At this point 36 g of water have distilled and the acid number is 10 mgKOH/g. The reaction mixture is cooled to 50°C and 110 g of acetic acid and 320 g of water are added.

### EXAMPLE 8

### Preparation of the amino-ester of adipic acid with dimethylethanolamine.

In a 1 liter reaction vessel equipped with stirrer, thermometer and distillation head 196.3 g (2.2 moles) of dimethylethanolamine are charged, heat is applied to reach 50°C and 146.2 g (1.0 moles) of adipic acid are added. Heating is applied so that the temperature of the distillation vapors do not exceed 105°C. After 6 hours the temperature of the reaction mixture reaches 190°C. 75.0 g of distillate are obtained, which contains 48 g of dimethylethanolamine and the acid number is 90 mgKOH/g, corresponding to a conversion degree of 75%. The reaction mixture is cooled to 50°C and 125 g of acetic acid and 280 g of water are added.

### EXAMPLE 9

### Preparation of the amino-amide of succinic anhydride with aminoethylethanolamine.

In a 1 liter reaction vessel of volume equipped with stirrer, thermometer and distillation head 208.3 g (2.0 moles) of aminoethylethanolamine are charged, heat is applied to reach 50°C and 100.1 g (1.0 moles) of succinic anhydride are added; due to the exothermic reaction the temperature increases to 150°C. Vacuum is applied to the reaction vessel to reach a residual pressure of about 20 mm Hg. This temperature is maintained for 2 hours, 18.0 g of distillate are collected and the amine number is 390 mgKOH/g. The reaction mixture is cooled to 90°C and 120 g of acetic acid and 250 g of water are added.

The product has a dry content of 45.8% by weight and a pH value of 6.9.

### EXAMPLE 10

### Preparation of the amide of adipic acid with aminoethylethanolamine.

In a 1 liter reaction vessel equipped with stirrer, thermometer and distillation head 208.3 g (2.0 moles) of aminoethylethanolamine are charged, heat is applied to reach 110°C and 146.2 g (1.0 moles) of adipic acid are added. Vacuum is applied to the reaction vessel to reach a residual pressure of about 20 mm Hg. Heating is applied to reach 160°C. After 4.5 hours the amine number is 360 mgKOH/g and the collected distillate is 35.5 g. The reaction mixture is cooled to 100°C and 120 g of acetic acid and 280 g of water are added.

The product has a dry content of 47.0% by weight and a pH value of 6.84.

### EXAMPLE 11

### Preparation of the amino-amide of sebacic acid with aminoethylethanolamine.

In a 1 liter reaction vessel equipped with stirrer, thermometer and distillation head 152.2 g (1.462 moles) of aminoethylethanolamine and 147.8 g (0.7308 moles) of sebacic acid are charged; heating is applied to reach 155°C. Vacuum is applied to the reaction vessel to reach a residual pressure of about 20 mm Hg. The temperature is maintained for 5 hours. The amine number is 310 mgKOH/g and 25.5 g of distillate are collected. The reaction mixture is cooled to 90°C and 87 g of acetic acid and 250 g of water are added.

The product has a dry content of 47.41 % by weight and a pH value of 6.9.

### EXAMPLE 12

### Preparation of the amino-amide of adipic acid with diethylenetriamine (DETA).

In a I liter reaction vessel equipped with stirrer, thermometer and distillation head 300.0 g (2.901 moles) of DETA are charged and heated to 60° C under nitrogen atmosphere; 212.6 g (1.455 moles) of adipic acid are added and the temperature rises to 130° C, due to the formation of the salt; heating is applied to reach 160° C and the distillation water is collected. After 6 hours the acidity number is 10, corresponding to a 97.1% conversion.

The reaction mixture is cooled to 66° C and 163.5 g (2.18 moles) of 80% acetic acid and 290 g of water are added.

### EXAMPLE 13

### Preparation of the amino-amide of terephthalic acid with diethylenetriamine (DETA).

In a 1 liter reaction vessel equipped with stirrer, thermometer and distillation head 300.0 g (2.901 moles) of DETA are charged and heated to 60° C under nitrogen atmosphere; 241.7 g (1.4549 moles) of terephthalic acid are added and the temperature rises to 130° C, due to the formation of the salt; heating is applied to reach 178° C and the distillation water is collected. After 6 hours the acidity number is 20, corresponding to a 94% conversion.

The reaction mixture is cooled to 90° C and 163.5 g (2.18 moles) of 80% acetic acid and 320 g of water are added.

### EXAMPLE 14

### Preparation of the amino-amide of adipic acid with triethylenetetramine (TETA).

In a 1 liter reaction vessel equipped with stirrer, thermometer and distillation head 400.0 g (2.7386 moles) of TETA are charged and heated to 60° C under nitrogen atmosphere; 194.7 g (1.3323moles) of adipic acid are added and the temperature rises to 131° C, due to the formation of the salt; heating is applied to reach 171° C and the distillation water is collected. After 5 hours the acidity number is 2.4 corresponding to a 99% conversion.

The reaction mixture is cooled to 68° C and 256.7 g (4.11 moles) of 80% acetic acid and 270 g of water are added.

### EXAMPLE 15

### Preparation of the amino-amide of terephthalic acid with triethylenetetramine (TETA).

In a 1 liter reaction vessel equipped with stirrer, thermometer and distillation head 292.2 g (2.0 moles) of TETA are charged and heated to 60° C under nitrogen atmosphere; 166.2 g (1.0 moles) of terephthalic acid are added and the temperature rises to 135° C, due to the formation of the salt; heating is applied to reach 190° C and the distillation water is collected. After 5 hours the acidity number is 8 corresponding to a 97% conversion.

The reaction mixture is cooled to 88° C and 225 g (3.0 moles) of 80% acetic acid and 190 g of water are added.

### EXAMPLE 16

### Preparation of the amino-amide of terephthalic acid with tetraethylenepentamine (TEPA).

In a 1 liter reaction vessel equipped with stirrer, thermometer and distillation head 300 g (1.5848 moles) of TEPA are charged and heated to 50° C under nitrogen atmosphere; 125.4 g (0.7545 moles) of terephthalic acid are added; heating is applied to reach 196° C and the distillation water is collected. After 6 hours the acidity number is 9 corresponding to a 96% conversion.

The reaction mixture is cooled to 75° C and 226.4 g (3.0 moles) of 80% acetic acid and 166 g of water are added.

### EXAMPLE 17

### Preparation of the amino-amide of adipic acid with tetraethylenepentamine (TEPA).

In a 1 liter reaction vessel equipped with stirrer, thermometer and distillation head 300 g (1.5848 moles) of TEPA are charged and heated to 50° C under nitrogen atmosphere; 110.4 g (0.7554 moles) of adipic acid are added; heating is applied to reach 188° C and the distillation water is collected. After 3 hours the acidity number is 3 corresponding to a 98.5% conversion.

The reaction mixture is cooled to 57° C and 226.4 g (3.0 moles) of 80% acetic acid and 157 g of water are added.

### PERFORMANCE TESTING

Performance tests have been carried out to determine the ability of the clays and shales inhibitors of the present invention to inhibit the swelling of a bentonite in a water base fluid.

The following method has been used, where ppb means "pounds per barrel":
350 ml tap water and 8 g (8 ppb) of clays and shales inhibitor (calculated on 100% active substance) are charged into a clean grass beaker.
10 g of bentonite (10 ppb) are added and the mixture (the mud) is mixed with a Hamilton Beach Mixer for 30 minutes.

Additional 10 grams of bentonite are added and the mud is mixed for additional 30 minutes; the procedure is repeated until a total of 40 ppb of bentonite have been added. The rheology of the mud is measured by means of a rotational viscometer Fann mod. 35 at 25°C. The mud is then aged in special cells, which are kept rolling in a special heated rolling oven at 65°C for 16 hours, and the rheology is again measured after the aging.

The additions of 10 g of bentonite and the heat aging are repated until the mud becomes too viscous to be measured.

The performance tests have been carried out as described here above on the clays and shales inhibitors of the present invention as prepared in the Examples I to 17, on diethanolamine (DEA) and on triethanolamine (TEA); the rheological data (Yeld Point) are reported in Table 1 and in Table 2, where the first column reports the ppb of bentonite added before the measurement, "AHR" means "after hot rolling".

### [Table 0001]

[Table]

**Table 1**

| | **Ex. 1** | **Ex. 2** | **Ex. 3** | **Ex. 4** | **Ex. 5** | **Ex. 6** | **Ex. 7** | **Ex. 8** | **Ex. 9** | **Ex. 10** | **Ex. 11** | **DEA** | **TEA** |
|---|---|---|---|---|---|---|---|---|---|---|---|---|---|
| **40** | 18 | 25 | 31 | 32 | 12 | 5 | 5 | 9 | 4 | 3 | 10 | 330 | 90 |
| **40 Ahr** | 7 | 9 | 10 | 14 | 7 | | 9 | 7 | 1 | -1 | 2 | | 195 |
| **50** | 15 | 17 | 21 | 22 | 23 | 2 | 20 | 22 | 2 | | 5 | | 330 |
| **60** | 32 | 33 | 38 | 41 | 115 | 27 | 35 | 44 | 6 | 1 9 | 13 | | |
| **60 Ahr** | | | | | 61 | 132 | | 13 | | | | | |
| **70** | 57 | 60 | 65 | 63 | | 109 | 67 | 99 | 14 | 21 | 29 | | |
| **70 Ahr** | | | | | | | 69 | 108 | 15 | 26 | 30 | | |
| **80** | 106 | 110 | 112 | 120 | | | 142 | | 41 | 75 | 86 | | |
| **80 Ahr** | 85 | 77 | 91 | 125 | | | 134 | | 66 | 98 | 142 | | |
| **90** | 143 | 138 | 172 | 330 | | | 330 | | 153 | 330 | 330 | | |
| **90 Ahr** | 147 | 176 | 320 | | | | | | 178 | | | | |

### [Table 0002]

[Table]

**Table 2**

| | **Ex. 12** | **Ex. 13** | **Ex. 14** | **Ex. 15** | **Ex. 16** | **Ex. 17** |
|---|---|---|---|---|---|---|
| 40 | 15 | 1 | 2 | -1 | 0 | 1 |
| 40 Ahr | 330 | 0 | 2 | 1 | 0 | 1 |
| 50 | | 6 | 12 | 6 | 5 | 6 |
| 60 | | 9 | 16 | 12 | 8 | 10 |
| 60 Ahr | | 330 | 20 | 6 | 4 | 4 |
| 70 | | | 88 | 5 | 5 | 2 |
| 70 Ahr | | | 330 | 2 | 3 | 0 |
| 80 | | | | 33 | 36 | 22 |
| 80 Ahr | | | | 51 | 48 | 21 |
| 90 | | | | 330 | 330 | 160 |

## Claims

1. Method for inhibiting the hydration of clays and shales during drilling operations comprising the use of a water base drilling fluid, which contains from 0.2 to 5 % by weight of the condensation product of a dicarboxylic acid having 4 to 10 carbon atoms with alkanolamines, diamines or polyalkyleneamines of formula (I), R"'R"N-R'-XH, where X is O or NR⁰; R⁰ is hydrogen or a linear or branched alkyl group having from 1 to 6 carbon atoms, R' is a linear or branched, aliphatic or cicloaliphatic alkylene group having from 2 to 10 carbon atoms or R' is R""(NH-R"")ₙ where R"" is ethylene or CH(CH ₃)CH₂, n is a number from 1 to 6 and X is NR⁰; R" and R"' can be equal or different from one another and are hydrogen or a linear or branched alkyl group having from 1 to 6 carbon atoms, optionally substituted with a hydroxyl group, the condensation product being in neutral form or in the form of salt.

2. Method for inhibiting the hydration of clays and shales according to claim 1, where the condensation product of a dicarboxylic acid having 4 to 10 carbon atoms with alkanolamines, diamines or polyalkyleneamines of formula (I) has formula (II), R"'R"N-R'-X-C(=O)-R-C(=O)-X-R'-NR"R"', where R is a linear or branched, saturated or unsaturated alkylene group having from 2 to 8 carbon atoms or a phenylene group, and X, R ⁰, R', R" and R"' have the same meaning as in formula (I).

3. Method for inhibiting the hydration of clays and shales according to claim 2, where the condensation product has formula (II), and R is an linear saturated alkylene group.

4. Method for inhibiting the hydration of clays and shales according to claim 3, where the condensation product has formula (II), and X is O, R is an tetramethylene or ethylene group R' is an ethylene group and R" and R"' can be equal or different and are hydrogen, methyl or hydroxyethyl groups.

5. Method for inhibiting the hydration of clays and shales according to claim 3, where the condensation product has formula (II), and X is NH, R is a tetramethylene or ethylene group, R' is an ethylene group or R""(NH-R"") ₙ where R"" is ethylene or CH(CH₃)CH₂ and n is a number from 1 to 4;and R" and R"' can be equal or different and are hydrogen, methyl or hydroxyethyl groups.

6. Water base drilling fluid comprising from 0.2 to 5% by weight, preferably from 2 to 4% by weight, of the condensation products of a dicarboxylic acid having 4 to 10 carbon atoms with alkanolamines, diamines or polyalkyleneamines of formula (I), R"'R"N-R'-XH, where X is O or NR⁰; R⁰ is hydrogen or a linear or branched alkyl group having from 1 to 6 carbon atoms, R' is a linear or branched, aliphatic or cicloaliphatic alkylene group having from 2 to 10 carbon atoms or R' is R""(NH-R"")ₙ where R"" is an ethylene group or CH(CH₃)CH₂, n is a number from 1 to 6 and X is NR⁰; R" and R"' can be equal or different from one another and are hydrogen or a linear or branched alkyl group having from 1 to 6 carbon atoms, optionally substituted with a hydroxyl group, the condensation product being in neutral form or in the form of or salt.

7. Water base drilling fluid according to claim 6, where the condensation product of a dicarboxylic acid having 4 to 10 carbon atoms with alkanolamines, diamines or polyalkyleneamines of formula (I) has formula (II),
R"'R"N-R'-X-C(=O)-R-C(=O)-X-R'-NR"R"', where R is a linear or branched, saturated or unsaturated alkylene group having from 2 to 8 carbon atoms, or a phenylene group, and X, R ⁰, R', R" and R"' have the same meaning as in formula (I).

8. Water base drilling fluid according to claim 7, in which the condensation product has formula (II) and R is a linear saturated alkylene group.

9. Water base drilling fluid according to claim 8, in which the condensation product has formula (II), and X is O, R is a tetramethylene or ethylene group R' is an ethylene group and R" and R"' can be equal or different and are hydrogen, methyl or hydroxyethyl groups.

10. Water base drilling fluid according to claim 8, in which the condensation product has formula (II), and X is NH, R is a tetramethylene or ethylene group R' is an ethylene group or R""(NH-R"")ₙ where R"" is ethylene or CH(CH₃)CH₂ and n is a number from 1 to 4; and R" and R"' can be equal or different and are hydrogen, methyl or hydroxyethyl groups.

## Patentansprüche

1. Methode zur Inhibition der Hydratation von Ton und Tonschiefer während Bohroperationen, bestehend aus der Verwendung einer wasserbasierenden Bohrflüssigkeit, die zwischen 0.2 und 5% Gewichtsanteile des Kondensationsprodukts einer 4 bis 10 Kohlenstoffatome enthaltenden Dicarboxylsäure mit Alkanolaminen, Diaminen oder Polyalkylenaminen der Formel (I), R"'R"N-R'-XH enthält, in der X ein O oder NR°, R° ein Wasserstoff oder eine lineare oder verzweigte Alkylgruppe mit 1 bis 6 Kohlenstoffatomen, R' eine lineare oder verzweigte, aliphatische oder cycloaliphatische Alkylengruppe mit 2 bis 10 Kohlenstoffatomen oder R' ein R""(NH-R"")ₙ ist, in der R"" ein Ethylen oder CH(CH₃)CH₂, n eine Nummer zwischen 1 und 6 und X ein NR° ist; R" und R"' können gleich oder verschieden voneinander und Wasserstoff oder eine lineare oder verzweigte Alkylgruppe mit 1 bis 6 Kohlenstoffatomen sein, die optional mit einer Hydroxylgruppe substituiert werden kann, wobei das Kondensationsprodukt in neutraler oder in Salzform vorliegt.

2. Methode zur Inhibition der Hydratation von Ton und Tonschiefer gemäß Patentanspruch 1, worin das Kondensationsprodukt einer 4 bis 10 Kohlenstoffatomen enthaltenden Dicarboxylsäure mit Alkanolaminen, Diaminen oder Polyalkylenaminen der Formel (I) die Formel (II) R"'R"N-R'-X-C(=O)-R-C(=O)-X-R'-NR"R"' besitzt, in der R eine lineare oder verzweigte, gesättigte oder ungesättigte Alkylengruppe mit 2 bis 8 Kohlenstoffatomen oder eine Phenylgruppe ist, und X, R°, R', R" und R"' die gleiche Bedeutung wie in Formel (I) haben.

3. Methode zur Inhibition der Hydratation von Ton und Tonschiefer gemäß Patentanspruch 2, worin das Kondensationsprodukt die Formel (II) besitzt, und R eine lineare, gesättigte Alkylengruppe ist

4. Methode zur Inhibition der Hydratation von Ton und Tonschiefer gemäß Patentanspruch 3, worin das Kondensationsprodukt die Formel (II) besitzt, und X ein O, R eine Tetramethylen- oder eine Ethylengruppe, R' eine Ethylengruppe ist und R" und R"' gleich oder unterschiedlich und Sauerstoff-, Methyl- oder Hydroxyethylgruppen sein können.

5. Methode zur Inhibition der Hydratation von Ton und Tonschiefer gemäß Patentanspruch 3, worin das Kondensationsprodukt die Formel (II) besitzt, und X ein NH, R eine Tetramethylen- oder eine Ethylengruppe, R' eine Ethylengruppe oder R""(NH-R"")ₙ ist, in der R"" ein Ethylen oder CH(CH₃)CH₂ und n eine Nummer zwischen 1 und 4 ist; und in der R" und R"' gleich oder unterschiedlich und Wasserstoff, Methyl- oder Hydroxyethylgruppen sein können.

6. Wasserbasierende Bohrflüssigkeit, bestehend aus 0.2 bis 5%, vorzugsweise aus 2 bis 4% Gewichtsanteilen des Kondensationsprodukts einer 4 bis 10 Kohlenstoffatome enthaltenden Dicarboxylsäure mit Alkanolaminen, Diaminen oder Polyalkylenaminen der Formel (I), R"'R"N-R'-XH, worin X ein O oder NR°, R° ein Wasserstoff oder eine lineare oder verzweigte, 1 bis 6 Kohlenstoff enthaltende Alkylgruppe, R' eine lineare oder verzweigte, aliphatische oder cycloaliphatische, 2 bis 10 Kohlenstoff enthaltende Alkylengruppe oder R' ein R""(NH-R"")ₙ ist, in der R"" ein Ethylen oder CH(CH₃)CH₂, n eine Nummer zwischen 1 und 6 und X ein NR° ist; R" und R"' können gleich oder verschieden voneinander und Wasserstoff oder eine lineare oder verzweigte Alkylgruppe mit 1 bis 6 Kohlenstoffatomen sein, die optional mit einer Hydroxylgruppe substituiert werden kann, wobei das Kondensationsprodukt in neutraler oder in Salzform vorliegt.

7. Wasserbasierende Bohrflüssigkeit gemäß Patenanspruch 6, worin das Kondensationsprodukt einer 4 bis 10 Kohlenstoffatomen enthaltenden Dicarboxylsäure mit Alkanolaminen, Diaminen oder Polyalkylenaminen der Formel (I) die Formel (II), R"'R"N-R'-X-C(-O)-R-C(=O)-X-R'-NR"R"' besitzt, in der R eine lineare oder verzweigte, gesättigte oder ungesättigte, 2 bis 8 Kohlenstoffatome enthaltende Alkylengruppe oder eine Phenylengruppe ist und X, R°, R', R" und R"' die gleiche Bedeutung wie in Formel (I) haben.

8. Wasserbasierende Bohrflüssigkeit gemäß Patenanspruch 7, worin das Kondensationsprodukt die Formel (II) besitzt und R eine lineare, gesättigte Alkylengruppe ist.

9. Wasserbasierende Bohrflüssigkeit gemäß Patenanspruch 8, worin das Kondensationsprodukt die Formel (II) besitzt und X ein O, R eine Tetramethylen- oder eine Ethylengruppe, R' eine Ethylengruppe und R" und R"' gleich oder unterschiedlich und Wasserstoff-, Methyl- oder Hydroxyethylgruppen sein können.

10. Wasserbasierende Bohrflüssigkeit gemäß Patenanspruch 8, worin das Kondensationsprodukt die Formel (II) besitzt und X ein NH, R eine Tetramethylen- oder Ethylengruppe, R' eine Ethylengruppe oder R""(NH-R"")ₙ ist, in der R"" ein Ethylen oder CH(CH₃)CH₂ und n eine Nummer zwischen 1 und 4 ist; und in der R" und R"' gleich oder unterschiedlich und Wasserstoff-, Methyl- oder Hydroxyethylgruppen sein können.

## Revendications

1. Procédé d'inhibition de l'hydratation d'argiles et d'argiles litées pendant les opérations de forage comprenant l'utilisation d'un fluide de forage à base d'eau contenant de 0,2 à 5 % en poids du produit de la condensation d'un acide dicarboxylique ayant de 4 à 10 atomes de carbone avec des alcanolamines, des diamines ou des polyalkylènamines de formule (I), R"'R"N-R'-XH, où X est un atome d'oxygène ou NR⁰ ; R⁰ est un atome d'hydrogène ou un groupe alkyle linéaire ou ramifié ayant de 1 à 6 atomes de carbone, R' est un groupe alkylène aliphatique ou cycloaliphatique linéaire ou ramifié ayant de 2 à 10 atomes de carbone ou bien R' est R""(NH-R"")ₙ où R"" est l'éthylène ou CH(CH₃)CH₂, n est un nombre de 1 à 6 et X est NR⁰ ; R" et R"' peuvent être identiques ou différents l'un de l'autre et sont l'hydrogène ou un groupe alkyle linéaire ou ramifié ayant de 1 à 6 atomes de carbone, éventuellement substitué par un groupe hydroxyle, ledit produit de condensation étant sous forme neutre ou sous forme de sel.

2. Procédé d'inhibition de l'hydratation d'argiles et d'argiles litées selon la revendication 1, selon lequel le produit de la condensation d'un acide dicarboxylique ayant de 4 à 10 atomes de carbone avec des alcanolamines, des diamines ou des polyalkylènamines de formule (I) répond à la formule (II), R"'R"N-R'-X-C(=O)-R-C(=O)-X-R'-NR"R"', dans laquelle R est un groupe alkylène saturé ou insaturé, linéaire ou ramifié ayant de 2 à 8 atomes de carbone ou un groupe phénylène, et X, R⁰, R', R" et R"' ont la même signification que dans la formule (I).

3. Procédé d'inhibition de l'hydratation d'argiles et d'argiles litées selon la revendication 2, selon lequel le produit de condensation est de formule (II) et R est un groupe alkylène saturé linéaire.

4. Procédé d'inhibition de l'hydratation d'argiles et d'argiles litées selon la revendication 3, selon lequel le produit de condensation répond à la formule (II), X est un atome d'oxygène, R est un groupe tétraméthylène ou éthylène, R' est un groupe éthylène et R" et R"' peuvent être identiques ou différents et sont l'hydrogène ou des groupes méthyle ou hydroxyéthyle.

5. Procédé d'inhibition de l'hydratation d'argiles et d'argiles litées selon la revendication 3, selon lequel le produit de condensation répond à la formule (II), X est NH, R est un groupe tétraméthylène ou un groupe éthylène, R' est un groupe éthylène ou bien R""(NH-R"")ₙ, où R"" est l'éthylène ou CH(CH₃)CH₂ et n est un nombre de 1 à 4 ; et R" et R"' peuvent être identiques ou différents et sont l'hydrogène ou des groupes méthyle ou hydroxyéthyle.

6. Fluide de forage à base d'eau comprenant de 0,2 à 5 % en poids, de préférence de 2 à 4 % en poids, du produit de la condensation d'un acide dicarboxylique ayant de 4 à 10 atomes de carbone avec des alcanolamines, des diamines ou des polyalkylènamines de formule (1), R"'R"N-R'-XH, où X est un atome d'oxygène ou NR⁰ ; R⁰ est l'hydrogène ou un groupe alkyle linéaire ou ramifié ayant de 1 à 6 atomes de carbone, R' est un groupe alkylène aliphatique ou cycloaliphatique linéaire ou ramifié ayant de 2 à 10 atomes de carbone ou bien R' est R""(NH-R"")ₙ où R"" est un groupe éthylène ou CH(CH₃)CH₂, n est un nombre de 1 à 6 et X est NR⁰ ; R" et R"' peuvent être identiques ou différents l'un de l'autre et sont l'hydrogène ou un groupe alkyle linéaire ou ramifié ayant de 1 à 6 atomes de carbone, éventuellement substitué par un groupe hydroxyle, ledit produit de condensation étant sous forme neutre ou sous forme de sel.

7. Fluide de forage à base d'eau selon la revendication 6, ledit produit de condensation d'un acide dicarboxylique ayant de 4 à 10 atomes de carbone avec des alcanolamines, des diamines ou des polyalkylènamines de formule (I) répondant à la formule (II), R"'R"N-R'-X-C(=O)-R-C(=O)-X-R'-NR"R"', dans laquelle R est un groupe alkylène saturé ou insaturé, linéaire ou ramifié ayant de 2 à 8 atomes de carbone ou un groupe phénylène, et X, R⁰, R', R" et R"' ont la même signification que dans la formule (I).

8. Fluide de forage à base d'eau selon la revendication 7, ledit produit de condensation étant de formule (II) et R étant un groupe alkylène saturé linéaire.

9. Fluide de forage à base d'eau selon la revendication 8, ledit produit de condensation étant de formule (II) et X étant un atome d'oxygène, R étant un groupe tétraméthylène ou éthylène, R' étant un groupe éthylène et R" et R"' pouvant être identiques ou différents et étant l'hydrogène ou des groupes méthyle ou hydroxyéthyle.

10. Fluide de forage à base d'eau selon la revendication 9, ledit produit de condensation étant de formule (II) et X étant NH, R étant un groupe tétraméthylène ou éthylène, R' étant un groupe éthylène ou R""(NH-R"")ₙ, où R"" est l'éthylène ou CH(CH₃)CH₂ et n est un nombre de 1 à 4 ; et R" et R"' pouvant être identiques ou différents et étant l'hydrogène ou des groupes méthyle ou hydroxyéthyle.
